(19) Europäisches Patentamt
European Patent Office
Office européen des brevets

(11) **EP 0 681 010 B1**

(12) **EUROPÄISCHE PATENTSCHRIFT**

(45) Veröffentlichungstag und Bekanntmachung des Hinweises auf die Patenterteilung:
**23.06.1999   Patentblatt 1999/25**

(51) Int Cl.6: **C09D 5/24**, H02G 15/068

(21) Anmeldenummer: **95106350.2**

(22) Anmeldetag: **27.04.1995**

(54) **Verfahren zur Herstellung eines Feldsteuerungsbelages für Mittelspannungsgarnituren**

Method of making a field control layer for medium voltage fittings

Procédé d'obtention d'une couche de commande de champ pour garnitures à moyenne tension

(84) Benannte Vertragsstaaten:
AT BE CH DE DK ES FR GB GR IT LI NL SE

(30) Priorität: **02.05.1994   DE 4415408**

(43) Veröffentlichungstag der Anmeldung:
**08.11.1995   Patentblatt 1995/45**

(73) Patentinhaber: **RXS Kabelgarnituren Gesellschaft mit beschränkter Haftung 58093 Hagen (DE)**

(72) Erfinder:
• **Binnewirtz, Ralf Jürgen, Dr.rer.nat. D-47807 Krefeld (DE)**
• **Böttcher, Bodo D-95447 Bayreuth (DE)**

(74) Vertreter: **Epping, Wilhelm, Dr.-Ing. et al Patentanwalt Postfach 22 13 17 80503 München (DE)**

(56) Entgegenhaltungen:
EP-A- 0 436 821          GM-A- 9 202 110
US-A- 4 252 692

**Beschreibung**

Die Erfindung betrifft ein Verfahren zur Herstellung eines Feldsteuerungsbelages für Mittelspannungsgarnituren, dessen Ausgangsstoffe ein bei Raumtemperatur zähflüssiges, stark klebriges Polymer, ein bei Raumtemperatur leicht flüchtiges Lösungsmittel, ein elektrisch leitfähiger Zusatz aus gekörntem Siliciumcarbid, verschiedene der Weichmachung dienende Additive und Antioxidantien sind.

Ein derartiger Feldsteuerungsbelag ist aus der europäischen Patentanmeldung EP 0 436 821 - A2 bekannt. Dort wird jedoch ein Lösungsmittel verwendet, das den neuerdings erlassenen Richtlinien für Lösungsmittel, insbesondere der FCKW-Halon-Verbotsverordnung, nicht mehr entspricht. Bei Ersatz eines solchen Lösungsmittels wie z. B. 1.1.1 - Trichlorethan durch ein beliebig anderes Lösungsmittel stellt sich jedoch heraus, daß die geforderten Bedingungen für Mittelspannungsgarnituren nicht mehr eingehalten werden können.

So liegt der vorliegenden Erfindung die Aufgabe zugrunde, ein Verfahren zur Herstellung eines Feldsteuerungsbelages zu schaffen, bei dem ein den neuen Umweltbedingungen entsprechendes Lösungsmittel verwendet wird, wobei die geforderten elektrischen Bedingungen für Mittelspannungsgarnituren voll erfüllt sein müssen.

Weiterhin ist Aufgabe der Erfindung, einen Feldsteuerungsbelag zu schaffen, der nach dem erfindungsgemäßen Verfahren hergestellt wird.

Die erste Aufgabe wird mit einem Verfahren der eingangs geschilderten Art dadurch gelöst, daß ein halogenfreies Lösungsmittel wie Isopropanol, 2-Butanon, Ethylacetat, Petroleumbenzin 60-80, n-Hexan oder Cyclohexan mit einer auf Ether bezogenen Verdunstungszahl von < 10 verwendet wird und daß halogenhaltige Zusatzadditive in Anteilen von 0,001 bis 25 Gew.-% zugesetzt werden und daß die gesamte Komponentenmischung auf die Oberfläche einer Mittelspannungsgarnitur aufgetragen wird, wobei dann die Abdunstung des Lösungsmittels erfolgt.

Die zweite Aufgabe wird gemäß der Erfindung nach den Merkmalen der Patentansprüche 23 bis 27 gelöst.

Bei dem Verfahren gemäß der Erfindung handelt es sich um die Herstellung eines Feldsteuerungsbelages für Mittelspannungsgarnituren aus verschiedenen Ausgangsstoffen, wie sie z.T. bereits bekannt sind. Unterschiedlich zu bisherigen Komponentenmischungen ist jedoch, daß hier ein halogenfreies Lösungsmittel verwendet wird, das den neuen Vorschriften bezüglich des allgemeinen Verbots der Anwendung von Chlorkohlenwasserstoffen (CKW) und Fluorkohlenwasserstoffen (FCKW) entspricht. Nun kann jedoch nicht nur ein Austausch des Lösungsmittels erfolgen; denn es stellt sich heraus, daß dann die erforderlichen Kriterien für Mittelspannungsgarnituren mit einer solchen Komponentenmischung nicht mehr eingehalten werden können. Es ist somit eine neue Rezeptur für die Herstellung eines Feldsteuerunsbelages nötig.

Als Wirkstoff zur Erzeugung der erforderlichen feldsteuernden Eigenschaften wird bei der neuen Rezeptur ebenfalls Siliciumcarbid in einer Mikrokörnung eingesetzt, wobei der Hauptanteil mit einer Körnung von 16,3 bis 30,7 µm mehr als 50 % beträgt. Bei einer Körnung von vorzugsweise 21,3 bis 24,3µm lassen sich die besten Ergebnisse erzielen. Dieses Siliciumkarbid wird als Ausgangsstoff einer geeigneten Polymermatrix gemischt, wobei diese einen möglichst hohen Füllgrad zulassen muß. Für diesen Zweck eignen sich hervorragend Flüssigpolymere auf der Basis Ethylen-Propylen-Terpolymer (EPM) oder Ethylen-Propylen-Dien-Terpolymer (EPDM). Diese Flüssigpolymere besitzen bei Raumtemperatur zähflüssige Konsistenz. Bei der Dien-Komponente in diesem Terpolymer kann es sich um Dicyclopentadien (DCP), 5-Ethyliden-2-Norbornen (EN) oder 1,4-Hexadien handeln, wobei als "Dien" die Komponente 5-Ethyliden-2-Norbornen (EN) oder Dicyclopentadien (DCP) bevorzugt werden.

Das Molekulargewicht $\overline{M}_v$ (Viskositätsmittel des Molekulargewichts) dieser Harze liegt zwischen 1000 und 15000, vorzugsweise zwischen 6000 bis 8000, der Dienanteil zwischen 0 und 13 Gew.-%, wobei der Anteil von 4,5 bis 9,5 Gew.-% bevorzugt wird. Das Ethylen-Propylen-Verhältnis im Ethylen-Propylen-Anteil liegt bei dieser Rezeptur zwischen 40/60 und 75/25 Gew.-%, wobei der Bereich von 43/57 bis 54/46 Gew.-% bevorzugt ist. Die bei Raumtemperatur zähflüssigen Harze besitzen Viskositäten von 8000 bis 10000 Pa·s.

Neben den EPDM-Flüssigpolymeren, kommen prinzipiell auch andere, unter Standardbedingungen flüssige Polymerharze für diese Anwendung in Frage. Solche Stoffe sind:

- Polyvinylether, z.B. Polyvinylisobutylether
- Flüssigpolymer-Harze auf der Basis aliphatischer und/oder aromatischer Kohlenwasserstoffe, die von EPM/EPDM abweichen, wie z.B. Polybutene, Polyisobutylene und andere.
- Acrylatharze
- Polybutadiene und Butadien-Styrol-Copolymere, jeweils mit Hydroxy-Endgruppen
- Flüssiger Nitrilkautschuk
- Mischungen dieser hier genannten Harze mit EPM/EPDM-Polymeren.

Die Verwendung von Flüssigpolymeren in dieser Dichtmasse für Feldsteuerungsbeläge hat sich als essentiell herausgestellt, da nur hiermit die erforderlichen hohen Füllgrade in Verbindung mit den anderen erforderlichen Eigenschaften (Haftung/Klebrigkeit, Fließeigenschaften, Plastizität und innere Festigkeit nach Abdunstung des Lösungsmittels) erzielt werden können. Polymerharze mit höherem Molekulargewicht, die bei Raumtemperatur eine feste Konsistenz aufweisen, erfüllen derartige Anforderungen nicht.

Als Klebrigmacher können weitere konventionelle Harze zugesetzt werden, wie z.B. Kolophoniumester bzw. Kolophoniumesterderivate, synthetische Kohlenwasserstoffharze, Phenolharze und Terpenharze.

Für die Auswahl des neuen Lösungsmittels gelten ebenfalls wie bisher die bekannten Kriterien, nämlich gute Lösekraft für die verwendete Polymermatrix und leichte Flüchtigkeit. Dies bedeutet kurze Verdunstungszeit bzw. niedrige Verdunstungszahl. Wenn die Verdunstungszahl für Ether mit 1 angesetzt ist, sind Lösungsmittel mit einer Verdunstungszahl von < 10, vorzugsweise jedoch < 5, besonders für den Einsatz bei einer solchen Komponentenmischung geeignet. Diese Kriterien erfüllen z.B. folgende halogenfreie Lösungsmittel:

- Isopropanol
- 2-Butanon
- Ethylacetat
- Petroleumbenzin 60 - 80
- n-Hexan
- Cyclohexan

Als besonders vorteilhaft stellte sich n-Hexan als Lösungsmittel in der vorgesehenen Komponentenauswahl heraus. n-Hexan besitzt ein sehr gutes Lösevermögen für EP(D)M-Flüssigpolymere sowie eine Verdunstungszahl von 1,4, die niedriger liegt als das bisher verwendete 1.1.1-Trichlorethan mit einer Verdunstungszahl von 2,5.

Wie bereits angedeutet ist, erfüllen die feldsteuernden Dichtmassen, bei denen lediglich das Lösungsmittel ausgetauscht wurde, die erforderlichen elektrischen Kriterien für Mittelspannungsgarnituren nicht in ausreichendem Maße. Die nachstehende Tabelle zeigt, daß bei der Prüfung der elektrischen Langzeitstabilität, d.h. der Dauerspannungsalterung ein enormer Abfall der Zeitdauer bis zum Ausfall der Prüflinge festzustellen ist. Diese Prüfung wird mit einer Spannung von 2,5 x $U_0$ = 30 kV in Prüfzyklen von 5h Heizen (95°C Leitertemperatur) und 3h Raumtemperatur durchgeführt. Als Prüfling hierfür wurde ein Kabel NA 2XS2Y 1x150 rm 12/20 kV mit einem Endverschluß GHKI der Firma RXS Garnituren GmbH, Hagen verwendet.

| Für die Dichtmasse verwendetes Lösungsmittel | Zeitdauer bis zum Ausfall der Prüflinge |
|---|---|
| 1.1.1.-Trichlorethan | > 48 Monate |
| n-Hexan | 3,5 Monate |
| 2-Butanon | 5,5 Monate |

Wie aus der Tabelle ersichtlich ist, führt der Ersatz des ursprünglichen Lösungsmittels durch halogenfreie Lösungsmittel zu relativ unbefriedigenden Ergebnissen. Gemäß der Erfindung wurde nun gefunden, daß mit dem Zusatz bestimmter Additive zu der Dichtmasse die Ergebnisse der elektrischen Langzeitprüfung wieder deutlich verbessert werden können und daß auf diese Weise das angestrebte Qualitätsniveau erreicht werden kann. Bei diesen Zusatzadditiven handelt es sich um halogenhaltige, bevorzugt Chlor und/oder bromhaltige Stoffe, die je nach ihrer chemischen Natur auch eine geringfügige Weichmachung der Dichtmasse bewirken können. Diese Weichmachung durch diese Zusatzadditive ist zwar ein positiver, aber nicht notwendiger Nebeneffekt bei einer solchen erfindungsgemäßen Rezeptur. Diese Zusatzadditive fallen nicht unter die oben bereits angegebene FCKW-Halon-Verbotsverordnung, da es sich entweder um schwerflüchtige Flüssigkeiten oder um Feststoffe handelt, die nicht zu einem Abbau der Ozonschicht beitragen. Solche Zusatzadditive, die bei der Herstellung eines Feldsteuerungsbelages gemäß der Erfindung beigemischt werden können, werden nachfolgend aufgeführt.

- chlorierte aliphatische Kohlenwasserstoffe, in gesättigter oder ungesättigter Form. Besonders geeignet sind Chlorparaffine in fester oder flüssiger Form mit 15-71 Gew.-% Chlorgehalt, wobei sich optimale Verhältnisse mit flüssigen Typen bei einem Chlorgehalt zwischen 40 und 60 Gew.-% ergeben. Die Kohlenstoffkettenlänge dieser bevorzugten Typen liegt im Bereich zwischen C6 und C20.
- chlorierte cycloaliphatische Verbindungen in gesättigter oder ungesättigter Form, wie z.B. Hexachlorendomethylentetrahydrophthalsäure bzw. deren Anhydrid Hexachlorcyclopentadien und andere.
- chlorierte aromatische Kohlenwasserstoffe wie z.B. chlorierte Diphenylether, Chlornaphthaline, wobei nur die Mono-bis Tri- und die Hepta- und Octachlorderivate bevorzugt werden, da diese nicht oder kaum toxisch sind. Tetrachlordibutoxybenzol, chlorierte Biphenyle (PCB, Clophen), die prinzipiell ebenfalls brauchbar wären, doch unterliegen sie wegen ihrer Toxizität Anwendungsbeschränkungen und kommen aus diesem Grunde kaum in Betracht. Ähnliches gilt für chlorierte Terphenyle.

EP 0 681 010 B1

- Halogenierte Phthalsäureester, z.B. Tetrachlordibutylphthalat

Diese angegebenen halogenhaltigen Verbindungen können in Anteilen von 0,001 bis 25 Gew.-% in die Dichtmassen eingemischt werden, wobei Anteile von 0,1 bis 1,0 Gew.-% bevorzugt sind.
Weiterhin können zur thermooxidativen Stabilisierung handelsübliche phenolische und/oder aminische Antioxidantien
zugesetzt werden, wie es aus dem Stand der Technik bekannt ist. Im folgenden werden feldsteuernde Dichtmassen
angegeben, die nach Verfahren gemäß der Erfindung herstellbar sind und die allen geforderten Kriterien für Feldsteuerungsbeläge bei Mittelspannungsgarnituren entsprechen. Derartige Dichtmassen werden dann als Innenbeschichtung in Endverschlüssen in den angegebenen Mischungen aufgetragen, wobei dann die Abdunstung des eingemischten Lösungsmittels erfolgt. Auf diese Weise erhält man dann einen Endverschluß, der den mechanischen und elektrischen Erfordernissen entspricht. Prüflinge, die nach diesem Verfahren mit den angegebenen Mischungsrezepturen
gemäß der Erfindung hergestellt werden, halten den Prüfbedingungen, insbesondere der Dauerspannungsalterung
ohne Ausfall mehr als 20 Monate stand.
In der nachfolgenden Tabelle werden einige Mischungsrezepturen angegeben, die nach dem Verfahren gemäß der
Erfindung zu Feldsteuerungsbelägen zusammengemischt und verarbeitet werden.

| EPDM-Flüssigpolymer Gew.-% | Siliciumcarbid Gew.-% | n-Hexan Gew.-% | Chlorparaffin Gew.-% | Antioxidantien Gew.-% |
|---|---|---|---|---|
| 16 | 64,5 | 19 | 0,4 | 0,1 |
| 16 | 63,9 | 19 | 1,0 | 0,1 |
| 15,9 | 61 | 18 | 5,0 | 0,1 |
| 14,9 | 59 | 16 | 10,0 | 0,1 |
| 13,4 | 54 | 12,5 | 20,0 | 0,1 |

**Patentansprüche**

1. Verfahren zur Herstellung eines Feldsteuerungsbelages für Mittelspannungsgarnituren, dessen Ausgangsstoffe
   ein bei Raumtemperatur zähflüssiges, stark klebriges Polymer, ein bei Raumtemperatur leicht flüchtiges Lösungsmittel, ein elektrisch leitfähiger Zusatz aus gekörntem Siliciumcarbid, verschiedene, der Weichmachung dienende
   Additive und Antioxidantien sind,
   **dadurch gekennzeichnet,**
   daß ein halogenfreies Lösungsmittel wie Isopropanol, 2-Butanon, Ethylacetat,Petroleumbenzin 60 - 80, n-Hexan
   oder Cylohexan mit einer auf Ether bezogenen Verdunstungszahl von < 10 verwendet wird und daß halogenhaltige
   Zusatzadditive in Anteilen von 0,001 bis 25 Gew.-% zugesetzt werden und daß die gesamte Komponentenmischung auf die Oberfläche einer Mittelspannungsgarnitur aufgetragen wird, wobei dann die Abdunstung des Lösungsmittels erfolgt.

2. Verfahren nach Anspruch 1,
   **dadurch gekennzeichnet,**
   daß als halogenhaltiges Additiv ein chlorierter, aliphatischer gesättigter oder ungesättigter Kohlenwasserstoff wie
   ein flüssiges oder festes Chlorparaffin mit einem Chlorgehalt von 15 - 71 Gew.-%, oder ein flüssiges Chlorparaffin
   mit einem Chlorgehalt von 40-60 Gew.-% und einer Kohlenstoffkettenlänge im Bereich von C6 bis C20 verwendet
   wird.

3. Verfahren nach Anspruch 1,
   **dadurch gekennzeichnet,**
   daß als halogenhaltiges Additiv eine gesättigte oder ungesättigte chlorierte cycloaliphatische Verbindung wie
   Hexachlorendomethylentetrahydrophthalsäure, deren Anhydrid oder Hexachlorcyclopentadien verwendet wird.

4. Verfahren nach Anspruch 1,
   **dadurch gekennzeichnet,**
   daß als halogenhaltiges Additiv ein chlorierter aromatischer Kohlenwasserstoff wie ein chlorierter Diphenylether
   oder ein Chlornaphthalin in Form eines Mono-bis Tri oder Hepta- und Octachlorderivates verwendet wird.

**5.** Verfahren nach Anspruch 1,
**dadurch gekennzeichnet,**
daß als halogenhaltiges Additiv Tetrachlordibutoxybenzol verwendet wird.

**6.** Verfahren nach Anspruch 1,
**dadurch gekennzeichnet,**
daß als halogenhaltiges Additiv ein chloriertes Terphenyl verwendet wird.

**7.** Verfahren nach Anspruch 1,
**dadurch gekennzeichnet,**
daß als halogenhaltiges Additiv halogenierter Phthalsäureester wie Tetrachlordibutylphthalat verwendet wird.

**8.** Verfahren nach einem der vorhergehenden Ansprüche,
**dadurch gekennzeichnet,**
daß phenolische und/oder aminische Antioxidantien beigemischt werden.

**9.** Verfahren nach einem der vorhergehenden Ansprüche,
**dadurch gekennzeichnet,**
daß als Klebrigmacher Kolophoniumester oder Kolophoniumesterderivate, synthetische Kohlenwasserstoffharze, Phenolharze oder Terpenharze beigemischt werden.

**10.** Verfahren nach einem der vorhergehenden Ansprüche,
**dadurch gekennzeichnet,**
daß das Siliciumcarbid in gekörntem Zustand mit einem Hauptkornanteil von > 50 % in einer Mikrokörnung von 16,3 bis 30,7 um beigemischt wird.

**11.** Verfahren nach einem der vorhergehenden Ansprüche,
**dadurch gekennzeichnet,**
daß ein Flüssigpolymer auf der Basis von Ethylen-Propylen-Terpolymer (EPM) mit einem Molekulargewicht $\overline{M}_V$ zwischen 1000 bis 15000 als Polymermatrix verwendet wird.

**12.** Verfahren nach einem der Ansprüche 1 bis 10,
**dadurch gekennzeichnet,**
daß ein Flüssigpolymer auf der Basis von Ethylen-Propylen-Dien-Terpolymer (EPDM) mit einem Molekulargewicht $\overline{M}_V$ zwischen 1000 bis 15000 verwendet wird, wobei der Dienanteil zwischen 0 und 13 Gew.-% liegt.

**13.** Verfahren nach Anspruch 12,
**dadurch gekennzeichnet,**
daß ein Ethylen-Propylen-Dien-Terpolymer (EPDM) mit der Dien-Komponente Dicyclopentadien (DCP) verwendet wird.

**14.** Verfahren nach Anspruch 12,
**dadurch gekennzeichnet,**
daß ein Ethylen-Propylen-Dien-Terpolymer mit der Dien-Komponente 5-Ethyliden-2-norbornen (EN) verwendet wird.

**15.** Verfahren nach Anspruch 12,
**dadurch gekennzeichnet,**
daß ein Ethylen-Propylen-Dien-Terpolymer (EPDM) mit der Dien-Komponente 1,4-Hexadien verwendet wird.

**16.** Verfahren nach einem der vorhergehenden Ansprüche,
**dadurch gekennzeichnet,**
daß eine Polymermatrix mit einem Ethylen-Propylen-Verhältnis zwischen 40/60 und 75/25 Gew.-% verwendet wird.

**17.** Verfahren nach einem der vorhergehenden Ansprüche,
**dadurch gekennzeichnet,**
daß die Polymermatrix in einer bei Raumtemperatur zähflüssigen Konsistenz mit einer Viskosität von 8000 bis 10000 Pa·s verwendet wird.

**18.** Verfahren nach einem der Ansprüche 1 bis 10,
**dadurch gekennzeichnet,**
daß als zähflüssiges Polymer ein Polyvinylether wie Polyvinylisobutylether verwendet wird.

**19.** Verfahren nach einem der Ansprüche 1 bis 10,
**dadurch gekennzeichnet,**
daß als zähflüssiges Polymer ein Flüssigpolymer-Harz auf der Basis aliphatischer und/oder aromatischer Kohlenwasserstoffe wie Polybutene oder Polyisobutylene verwendet wird.

**20.** Verfahren nach einem der Ansprüche 1 bis 10,
**dadurch gekennzeichnet,**
daß als zähflüssiges Polymer ein Acrylharz verwendet wird.

**21.** Verfahren nach einem der Ansprüche 1 bis 10,
**dadurch gekennzeichnet,**
daß als zähflüssiges Polymer ein Polybutadien und Butadien-Styrol-Copolymer mit Hydroxy-Endgruppen verwendet wird.

**22.** Verfahren nach einem der Ansprüche 1 bis 10,
**dadurch gekennzeichnet,**
daß als zähflüssiges Polymer flüssiger Nitrilkautschuk verwendet wird.

**23.** Feldsteuerungsbelag, hergestellt nach Verfahren der vorhergehenden Ansprüche,
**dadurch gekennzeichnet,**
daß folgende Ausgangsstoffe in den angegebenen Gew.-% miteinander vermischt sind:

    16 Gew.-% Flüssigpolymer (EPDM)
    64,5 Gew.-% Siliciumcarbid
    19 Gew.-% n-Hexan
    0,4 Gew.-% Chlorparaffin
    0,1 Gew.-% Antioxidantien

**24.** Feldsteuerungsbelag, hergestellt nach Verfahren der Ansprüche 1 bis 22,
**dadurch gekennzeichnet,**
daß folgende Ausgangsstoffe in den angegebenen Gew.-% miteinander vermischt sind:

    16 Gew.-% Flüssigpolymer (EPDM)
    63,9 Gew.-% Siliciumcarbid
    19 Gew.-% n-Hexan
    1,0 Gew.-% Chlorparaffin
    0,1 Gew.-% Antioxidantien

**25.** Feldsteuerungsbelag hergestellt nach Verfahren der Ansprüche 1 bis 22,
**dadurch gekennzeichnet,**
daß folgende Ausgangsstoffe in den angegebenen Gew.-% miteinander vermischt sind:

    15,9 Gew.-% Flüssigpolymer (EPDM)
    61 Gew.-% Siliciumcarbid
    18 Gew.-% n-Hexan
    5 Gew.-% Chlorparaffin
    0,1 Gew.-% Antioxidantien.

**26.** Feldsteuerungsbelag, hergestellt nach Verfahren der Ansprüche 1 bis 22,
**dadurch gekennzeichnet,**
daß folgende Ausgangsstoffe in den angegebenen Gew.-% miteinander vermischt sind:

    14,9 Gew.-% Flüssigpolymer (EPDM)
    59 Gew.-% Siliciumcarbid

16 Gew.-% n-Hexan
10 Gew.-% Chlorparaffin
0,1 Gew.-% Antioxidantien.

**27.** Feldsteuerungsbelag, hergestellt nach Verfahren der Ansprüche 1 bis 22,
**dadurch gekennzeichnet,**
daß folgende Ausgangsstoffe in den angegebenen Gew.-% miteinander vermischt sind:

13,4 Gew.-% Flüssigpolymer (EPDM)
54 Gew.-% Siliciumcarbid
12,5 Gew.-% n-Hexan
20 Gew.-% Chlorparaffin
0,1 Gew.-% Antioxidantien.

## Claims

1. Process for the production of a field control coating for medium-voltage fittings, whose starting materials are a highly tacky polymer which is viscous at room temperature, a solvent which is readily volatile at room temperature, an electrically conductive additive comprising particulate silicon carbide, various additives serving for platicizing and antioxidants, characterized in that a halogen-free solvent, such as isopropanol, 2-butanone, ethyl acetate, naphtha 60 - 80, n-hexane or cyclohexane, having an evaporation number, based on ether, of < 10, is used and that halogen-containing supplementary additives are added in amounts of from 0.001 to 25% by weight and that the total mixture of components is applied to the surface of a medium-voltage fitting, the solvent then being evaporated.

2. Process according to Claim 1, characterized in that the halogen-containing additive used is a chlorinated, aliphatic saturated or unsaturated hydrocarbon, such as a liquid or solid chloroparaffin having a chlorine content of 15 - 71% by weight, or a liquid chloroparaffin having a chlorine content of 40 - 60% by weight and a carbon chain length in the range from C6 to C20.

3. Process according to Claim 1, characterized in that the halogen-containing additive used is a saturated or unsaturated chlorinated cycloaliphatic compound, such as hexachloroendomethylenetetrahydrophthalic acid, the anhydride thereof or hexachlorocyclopentadiene.

4. Process according to Claim 1, characterized in that the halogen-containing additive used is a chlorinated aromatic hydrocarbon, such as a chlorinated diphenyl ether, or a chloronaphthalene in the form of a mono- to tri- or hepta- or octachloro derivative.

5. Process according to Claim 1, characterized in that the halogen-containing additive used is tetrachlorodibutoxybenzene.

6. Process according to Claim 1, characterized in that the halogen-containing additive used is a chlorinated terphenyl.

7. Process according to Claim 1, characterized in that the halogen-containing additive used is halogenated phthalic ester, such as tetrachlorodibutyl phthalate.

8. Process according to any of the preceding claims, characterized in that phenolic and/or amine antioxidants are admixed.

9. Process according to any of the preceding claims, characterized in that rosin esters or rosin ester derivatives, synthetic hydrocarbon resins, phenol resins or terpene resins are admixed as tackifiers.

10. Process according to any of the preceding claims, characterized in that the silicon carbide is admixed in particulate state having a main particle fraction of > 50% comprising microparticles of from 16.3 to 30.7 $\mu m$.

11. Process according to any of the preceding claims, characterized in that a liquid polymer based on ethylene/propylene terpolymer (EPM) having a molecular weight $\overline{M}_v$ of from 1000 to 15,000 is used as the polymer matrix.

12. Process according to any of Claims 1 to 10, characterized in that a liquid polymer based on ethylene/propylene/diene terpolymer (EPDM) having a molecular weight $\overline{M}_v$ of from 1000 to 15,000 is used, the amount of diene being from 0 to 13% by weight.

13. Process according to Claim 12, characterized in that an ethylene/propylene/diene terpolymer (EPDM) having the diene component dicyclopentadiene (DCP) is used.

14. Process according to Claim 12, characterized in that an ethylene/propylene/diene terpolymer having the diene component 5-ethylidene-2-norbornene (EN) is used.

15. Process according to Claim 12, characterized in that an ethylene/propylene/diene terpolymer (EPDM) having the diene component 1,4-hexadiene is used.

16. Process according to any of the preceding claims, characterized in that a polymer matrix having an ethylene/propylene ratio between 40/60 and 70/25% by weight is used.

17. Process according to any of the preceding claims, characterized in that the polymer matrix is used in a consistency which is viscous at room temperature and has a viscosity of from 8000 to 10,000 Pa·s.

18. Process according to any of Claims 1 to 10, characterized in that the viscous polymer used is a polyvinyl ether, such as polyvinyl isobutyl ether.

19. Process according to any of Claims 1 to 10, characterized in that the viscous polymer used is a liquid polymer resin based on aliphatic and/or aromatic hydrocarbons, such as polybutenes or polyisobutylenes.

20. Process according to any of Claims 1 to 10, characterized in that the viscous polymer used is an acrylic resin.

21. Process according to any of Claims 1 to 10, characterized in that the viscous polymer used is a polybutadiene and butadiene/styrene copolymer having terminal hydroxyl groups.

22. Process according to any of Claims 1 to 10, characterized in that the viscous polymer used is liquid nitrile rubber.

23. Field control coating, produced by processes of the preceding claims, characterized in that the following starting materials are mixed with one another in the % by weight stated:

    16% by weight of liquid polymer (EPDM)
    64.5% by weight of silicon carbide
    19% by weight of n-hexane
    0.4% by weight of chloroparaffin
    0.1% by weight of antioxidants

24. Field control coating, produced by processes of Claims 1 to 22, characterized in that the following starting materials are mixed with one another in the % by weight stated:

    16% by weight of liquid polymer (EPDM)
    63.9% by weight of silicon carbide
    19% by weight of n-hexane
    1.0% by weight of chloroparaffin
    0.1% by weight of antioxidants

25. Field control coating produced by processes of Claims 1 to 22, characterized in that the following starting materials are mixed with one another in the stated % by weight:

    15.9% by weight of liquid polymer (EPDM)
    61% by weight of silicon carbide
    18% by weight of n-hexane
    5% by weight of chloroparaffin
    0.1% by weight of antioxidants.

26. Field control coating, produced by processes of Claims 1 to 22, characterized in that the following starting materials are mixed with one another in the stated % by weight:

> 14.9% by weight of liquid polymer (EPDM)
> 59% by weight of silicon carbide
> 16% by weight of n-hexane
> 10% by weight of chloroparaffin
> 0.1% by weight of antioxidants.

27. Field control coating, produced by processes of Claims 1 to 22, characterized in that the following starting materials are mixed with one another in the stated % by weight:

> 13.4% by weight of liquid polymer (EPDM)
> 54% by weight of silicon carbide
> 12.5% by weight of n-hexane
> 20% by weight of chloroparaffin
> 0.1% by weight of antioxidants.

## Revendications

1. Procédé pour produire une couche de commande du champ pour accessoires de câble moyenne tension dont les produits de départ sont un polymère visqueux et fortement adhésif à température ambiante, un solvant hautement volatil à température ambiante, un additif électro-conducteur en carbure de silicium granulé, différents additifs et antioxygènes servant à la plastification,
   **caractérisé par le fait**
   qu'on utilise un solvant exempt d'halogène, comme l'isopropanol, le butanone 2, l'ester acétique, l'essence de pétrole 60-80, le n-hexane ou le cyclohexane avec un indice d'évaporation par rapport à l'éther inférieur à 10 et que des additifs halogénés sont ajoutés dans des proportions de 0,001 à 25 % en poids et que l'ensemble du mélange des composants est appliqué sur la surface d'un accessoire de câble moyenne tension, application alors suivie de l'évaporation du solvant.

2. Procédé selon la revendication 1
   **caractérisé par le fait**
   qu'on utilise, comme additif à teneur halogène, un hydrocarbure chloré, aliphatique, saturé ou non saturé, tel qu'une chloroparaffine liquide ou solide avec une teneur en chlore de 15 - 71 % en poids ou une chloroparaffine liquide avec une teneur en chlore de 40 - 60 % en poids et une longueur de chaîne de carbure dans la plage de C6 à C20.

3. Procédé selon la revendication 1
   **caractérisé par le fait**
   qu'on utilise, comme additif à teneur halogène, un combiné chloré et cycloaliphatique, saturé ou non saturé, tel que l'acide hexachloro-endométhylènetétrahydrophtalique, son anhydride ou des hexachlorocyclopentadiènes.

4. Procédé selon la revendication 1
   **caractérisé par le fait**
   qu'on utilise, comme additif à teneur halogène, un hydrocarbure chloré et aromatique tel qu'un éther diphynélique chloré ou une chloronaphtaline sous forme d'un monochloro- à trichlorodérivé ou d'un heptachloro- et octachlorodérivé.

5. Procédé selon la revendication 1
   **caractérisé par le fait**
   qu'on utilise, comme additif à teneur halogène, un tétrachlorure de dibutoxybenzène.

6. Procédé selon la revendication 1
   **caractérisé par le fait**
   qu'on utilise, comme additif à teneur halogène, un terphényle chloré.

**7.** Procédé selon la revendication 1
**caractérisé par le fait**
qu'on utilise, comme additif à teneur halogène, un ester phtalique halogéné, tel qu'un tétrachlorure de dibutylphtalate.

**8.** Procédé selon l'une des revendications précédentes
**caractérisé par le fait**
qu'on ajoute au mélange des antioxygènes phénoliques et/ou aminiques.

**9.** Procédé selon l'une des revendications précédentes
**caractérisé par le fait**
qu'on ajoute au mélange, comme agent adhésif, des esters colophaniques ou des dérivés de l'ester colophanique, des résines synthétiques à base d'hydrocarbures, des résines phénoliques ou des résines terpéniques.

**10.** Procédé selon l'une des revendications précédentes
**caractérisé par le fait**
qu'on ajoute au mélange du carbure de silicium en grains, la majeure partie, supérieure à 50 %, ayant un micrograin de 16,3 à 30,7 µm.

**11.** Procédé selon l'une des revendications précédentes
**caractérisé par le fait**
qu'on utilise, comme matrice polymère, un polymère liquide à base d'un terpolymère d'éthylène-propylène (EPM) avec un poids moléculaire $\overline{M}_v$ entre 1000 et 15000.

**12.** Procédé selon l'une des revendications 1 à 10
**caractérisé par le fait**
qu'on utilise un polymère liquide à base d'un terpolymère d'éthylène-propylène-diène (EPDM) avec un poids mo-léculaire $\overline{M}_v$ entre 1000 et 15000, la proportion de diène se trouvant entre 0 et 13 % en poids.

**13.** Procédé selon la revendication 12
**caractérisé par le fait**
qu'on utilise un terpolymère d'éthylène-propylène-diène (EPDM) avec la composante diène dicyclopentadiène (DCP).

**14.** Procédé selon la revendication 12
**caractérisé par le fait**
qu'on utilise un terpolymère d'éthylène-propylène-diène avec la composante diène 5-éthylidène-2-norbornène (EN).

**15.** Procédé selon la revendication 12
**caractérisé par le fait**
qu'on utilise un terpolymère d'éthylène-propylène-diène (EPDM) avec la composante diène hexadiène 1,4 (DCP).

**16.** Procédé selon l'une des revendications précédentes
**caractérisé par le fait**
qu'on utilise une matrice polymère avec une proportion éthylène-propylène comprise entre 40 / 60 et 75 / 25 % en poids.

**17.** Procédé selon l'une des revendications précédentes
**caractérisé par le fait**
qu'on utilise une matrice polymère à consistance visqueuse à température ambiante avec une viscosité de 8000 à 10000 Pa•s.

**18.** Procédé selon l'une des revendications 1 à 10
**caractérisé par le fait**
qu'on utilise, comme polymère visqueux, un éther polyvinylique tel que l'éther polyvinylisobutylique.

**19.** Procédé selon l'une des revendications 1 à 10

EP 0 681 010 B1

**caractérisé par le fait**

qu'on utilise, comme polymère visqueux, une résine de polymère liquide à base d'hydrocarbures aliphatiques et/ou aromatiques, tels que des polybutènes ou des polyisobutilènes.

20. Procédé selon l'une des revendications 1 à 10
**caractérisé par le fait**
qu'on utilise, comme polymère visqueux, une résine acrylique.

21. Procédé selon l'une des revendications 1 à 10
**caractérisé par le fait**
qu'on utilise, comme polymère visqueux, un copolymère polybutadiène et butadiène-styrène avec des groupes terminaux hydroxyliques.

22. Procédé selon l'une des revendications 1 à 10
**caractérisé par le fait**
qu'on utilise, comme polymère visqueux, du caoutchouc nitrilique liquide.

23. Couche de commande du champ fabriquée selon un procédé des revendications précédentes
**caractérisée par le fait**
que les produits de base suivants sont mélangés ensemble dans les proportions indiquées:

    16 % en poids de polymère liquide (EPDM)
    64,5 % en poids de carbure de silicium
    19 % en poids de n-hexane
    0,4 % en poids de chloroparaffine
    0,1 % en poids d'antioxygènes.

24. Couche de commande du champ fabriquée selon un procédé des revendications 1 à 22
**caractérisée par le fait**
que les produits de base suivants sont mélangés ensemble dans les proportions indiquées:

    16 % en poids de polymère liquide (EPDM)
    63,9 % en poids de carbure de silicium
    19 % en poids de n-hexane
    1,0 % en poids de chloroparaffine
    0,1 % en poids d'antioxygènes.

25. Couche de commande du champ fabriquée selon un procédé des revendications 1 à 22
**caractérisée par le fait**
que les produits de base suivants sont mélangés ensemble dans les proportions indiquées:

    15,9 % en poids de polymère liquide (EPDM)
    61 % en poids de carbure de silicium
    18 % en poids de n-hexane
    5 % en poids de chloroparaffine
    0,1 % en poids d'antioxygènes.

26. Couche de commande du champ fabriquée selon un procédé des revendications 1 à 22
**caractérisée par le fait**
que les produits de base suivants sont mélangés ensemble dans les proportions indiquées:

    14,9 % en poids de polymère liquide (EPDM)
    59 % en poids de carbure de silicium
    16 % en poids de n-hexane
    10 % en poids de chloroparaffine
    0,1 % en poids d'antioxygènes.

27. Couche de commande du champ fabriquée selon un procédé des revendications 1 à 22

11

**caractérisée par le fait**
que les produits de base suivants sont mélangés ensemble dans les proportions indiquées:

13,4 % en poids de polymère liquide (EPDM)
54 % en poids de carbure de silicium
12,5 % en poids de n-hexane
20 % en poids de chloroparaffine
0,1 % en poids d'antioxygènes.